(19) Europäisches Patentamt
European Patent Office
Office européen des brevets

(11) Publication number: 0 379 852 A1

# (12) EUROPEAN PATENT APPLICATION

(21) Application number: 89870214.7

(22) Date of filing: 21.12.89

(51) Int. Cl.5: A01N 57/20, //(A01N57/20, 43:82,25:04)

(30) Priority: 14.11.89 US 433561
27.12.88 US 290132

(43) Date of publication of application:
01.08.90 Bulletin 90/31

(84) Designated Contracting States:
GR

(71) Applicant: MONSANTO COMPANY
800 North Lindbergh Boulevard
St. Louis Missouri 63167(US)

(72) Inventor: Wright, Daniel Richard
7005 Southland
St. Louis Missouri 63109(US)

(74) Representative: Lunt, John Cooper et al
Monsanto Services International S.A. Patent
Department Avenue de Tervuren 270/272
L.Box 21
B-1150 Brussels(BE)

## (54) Compositions containing a polar and a nonpolar herbicide.

(57) A herbicidal aqueous composition comprising a mixture of a oxadiazolone herbicide and N-phosphonomethylglycine herbicide is provided. An emulsifying agent is also present in an amount sufficient to render the emulsion stable. A thickening agent is included in the composition, if needed to thicken the composition sufficiently that the composition passes through the measurement orifice of a Ford B2 Cup at a rate to 100 ml of composition in about 25-125 seconds.

EP 0 379 852 A1

Xerox Copy Centre

# COMPOSITIONS CONTAINING A POLAR AND A NONPOLAR HERBICIDE

## Background of the Invention

### A. Field of the Invention

This invention relates to a herbicidal composition suitable for being applied to plants by rotatory spraying. More particularly, this invention relates to a water-in-oil emulsion containing a polar herbicide in the aqueous phase and a nonpolar herbicide in the oil phase suitable for being applied to plants by rotary spraying.

### B. Prior Art

5-t-butyl-3-phenyl-2-oxadiazolones are known nonpolar selective postemergence herbicides effective against mono and di-cotyledonous weeds. One such oxadiazolone which have the common name of oxadiazon is 5-t-butyl-3-(2,4-dichloro-5-isopropoxyphenyl)-1,3,4-oxadiazol-2(H)-one.

N-phosphonomethylglycine is a known polar, very broad spectrum, relatively nonselective herbicide and has the common name of glyphosate. Glyphosate is conventionally applied as an aqueous composition of a more water soluble salt form thereof. Commercially available formulations of glyphosate contain glyphosate in the form of its isopropylamine salt in aqueous solution.

Recently, it has become known to apply spray solutions containing a herbicide by centrifugation. This is accomplished by feeding a spray mixture to a device equipped with a distribution element that rotatably discharges the herbicide in a controlled manner onto a defined area of plants. British Patent Specifica tion No. 2,131,327 discloses spray equipment useful for rotary dispensation of herbicides.

Difficulties are encountered in obtaining a uniform spray when known spray mixtures of glyphosate and oxadiazolone herbicides are employed using a device designed to discharge a herbicidal mixture from a distribution element by centrifugal force. The present invention provides a composition of glyphosate and oxadiazolone herbicides suitable for being applied directly by centrifugation.

## Summary of the Invention

The present invention provides a composition which is suitable for being directly applied to plants or to the ground and is especially suitable for rotary deposition. The composition is an water-in-oil emulsion containing at least one polar herbicide and at least one non-polar herbicide. It is preferred that the polar herbicide is glyphosate and the nonpolar herbicide is a oxadiazolone herbicide. The composition also contains an aromatic solvent in an amount sufficient to dissolve the oxadiazolone herbicide. The composition contains water in an amount sufficient to dissolve the glyphosate. The formulation also contains a suitable emulsifying agent in an amount sufficient to keep the water and oil phases from separating to an undesirable extent. If needed to provide the viscosity required for rotary spraying, a polymeric thickening agent, such as polyethylene, may also be included in the formulation in an amount sufficient to provide the required viscosity. Other adjuvants may be present in the composition. For example, it is often preferred that a biocide be included in the composition to minimize the build up of microorganisms. In order to prevent freezing of the composition, an antifreeze agent, such as ethylene glycol or propylene glycol, may be incorporated in the composition. The incorporation of an antifoam agent is often useful to prevent foaming and air entrapment at high sheer rates.

Preferably, the composition contains about 5-25 percent by weight of the nonpolar oxadiazolone herbicide and about 1-16 percent by weight of the polar glyphosate herbicide. More preferably, the oxadiazolone herbicide is present in the composition in an amount of about 8-20 percent by weight and glyphosate is present in the composition in an amount of about 2-8 percent by weight.

The oxadiazolone herbicides useful in the composition of the present invention include the 5-t-butyl-3-phenyl-2-oxadiazolones of the formula:

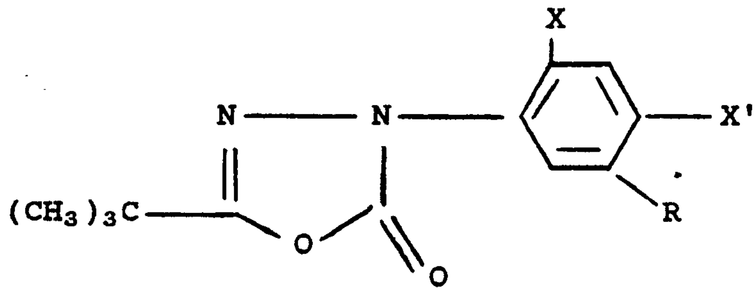

in which X and X′ are each halogen and R is hydrogen or alkoxy of 1 to 4 carbon atoms, especially methoxy, ethoxy or isopropoxy.

N-phosphonomethylglycine useful in the composition has the structural formula:

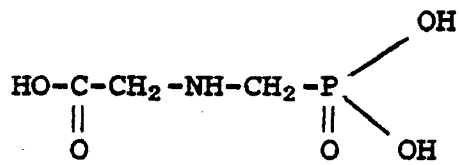

In view of its limited solubility of water N-phosphonomethyl glycine is formulated in the form of a water souble herbicidally acceptable salt.

Preferably, the composition contains about 30-70 percent by weight of at least one aromatic solvent. More preferably, the aromatic solvent is present in an amount of about 40-60 percent by weight of the composition.

Alkylated aromatic petroleum derived solvents are especially useful for preparing the composition of the present invention. Such solvents are a mixture of various aromatics and are available from Exxon Corporation under the names Aromatic 100, Aromatic 150 and Aromatic 200. These solvents comprise at least about 98 percent aromatics with the remainder being nonaromatic. Aromatic 200 is the most preferred solvent and is composed of about 16 percent C-10 aromatics, 50 percent C-11 aromatics, 26 percent C-12 aromatics, and 16 percent C-13 aromatics.

Other aromatic hydrocarbon solvents useful in the composition of the present invention include, for example, such solvents as toluene, xylene, mesitylene, and the like, including mixtures thereof.

Preferably, the composition contains about 8-50 percent by weight water. More preferably the water content of the composition is about 15-30 percent by weight.

Preferably, the composition contains a polymeric thickening agent that is soluble in the aromatic hydrocarbon solvent. Such polymeric substance is employed to control the viscosity of the formulation. The preferred thickening agent is polyethylene having a suitable molecular weight. The thickener level can range from about 0.01 - 2 percent of the formulation.

Preferably, the composition contains about 2-15 percent by weight of an emulsifying agent. More preferably, the emulsifying agent is present in the composition in an amount of about 3-12 percent by weight.

The emulsifying agents useful in the compositions of the present invention include polyoxyethylene-polyoxypropylene block copolymers, polyalkoxylated alkylphenol such as polyethoxylated nonylphenols, polyoxyphosphate esters, salts of dodecyl benzene sulfonic acid, polyoxyalkyl alcohol, polyoxy-castor oil, mixtures and the like.

Also suitable are ethoxylated amines. Such amines are tertiary amines with one fatty alkyl group and two hydroxyethyl or polyoxyethylene groups attached to the nitrogen atom. Their molecular structure maybe represented by the formula

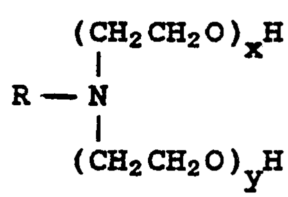

where R = C12 to C18
x + y = 2 to 50.

The formulations of the present invention may contain a polyoxyalkylamine for potentiation of the herbicidal activity of glyphosate. The amount of polyoxyalkylamine can range from about 0.0 to 5 percent on a weight basis of the composition.

The formulations of the present invention may contain a silicon antifoam to control the foaming of the formulation. The amount of antifoam agent can range from 0.1-2.0 percent on a weight basis of the composition.

In formulating the composition of the present invention, the ingredients and amounts thereof are selected and combine in such a way as to create a formulation that has an optimum stability and viscosity such that the formulation does not separate into layers within a reasonable length of time, will spray suitably through and from a rotary spray device in such a manner that controlled droplet size is achieved, and the flow rate through the lance is such that the optimum amount of the product is delivered to the target plants.

The viscosity of the composition is characterized by having a flowability at 25 °C such that the time elapsed for 100 ml of the composition to pass through a measurement orifice of a Ford B2 Cup is in the range of from about 25-125 seconds.

The practice of the invention will be further illustrated by means of the following examples, wherein unless otherwise indicated, all parts or percentages are given on a weight basis.

## EXAMPLE I

One part of polyethylene homopolymer thickener was dissolved in 492 parts of Aromatic 200. Next, 164 parts of oxadiazon technical containing 94% active ingredient was dissolved in the resulting thickener -aromatic hydrocarbon solution. Fifty parts of an emulsifier was added to the resulting solution containing the herbicide. Chemically, the emulsifier was Flo Mo 125D which is a polyethyleneoxide-polypropyleneoxide block copolymer. After the herbicide was added, one part of TH silicone antifoam-30 was added.

In a separate vessel 146 parts of water was mixed with 129 parts of aqueous solution of the isopropylamine salt of N-phosphonomethylglycine. The aqueous solution contained 46% N-phosphonomethylglycine on an acid equivalency basis and 17 parts of polyoxyalklamine potentiator. Chemically, the polyoxyalklamine was an ethoxylated tertiary amine having one long chain ethyl N-substituent (C15) and a total of 5EO N-substituents.

The organic solution containing the oxadiazolone herbicide was mixed with the aqueous solution of N-phosphonomethylglycine. The resulting mixture was homogenized using a TEKMAR homogenizer. The resulting formulation had a Ford Cup value of 35 seconds. The composition was delivered to a target area using the rotary spray device disclosed in British Patent Specification No. 2,131,327. The spray pattern was even and of excellent droplet size.

## EXAMPLE II

Following the formulating procedure of Example I, the following composition was prepared:

| Ingredient | % |
|---|---|
| Aromatic 200 | 30 |
| Water | 39 |
| Glyphosate Sol. (41% ae) | 11 |
| Oxadiazon (94% ai) | 13 |
| 4 EO nonylphenol | 2 |
| 50 EO nonylphenol | 2 |
| 6 EO Nonylphenol phosphate ester | 0.5 |
| Ethomeen C/12 | 1.8 |
| Antifoam (30% | 0.7 |
| Rhodopol 50 MC biocide | 0.2 |

The above formulation had a Ford Cup value of 128 seconds.

EXAMPLE III

Following the formulating procedure of Example I, the following composition was prepared:

| Ingredient | % |
|---|---|
| Aromatic 200 | 46 |
| Water | 15 |
| Glyphosate Sol. (46% ae) | 13 |
| Oxadiazon (94% ai) | 16 |
| Isopropylamine salt of dodecylbenzenesulfonic acid | 0.3 |
| Ethoxylated C-13 alcohol | 0.5 |
| Ethoxylated Castor Oil | 1.3 |
| EO-PO block copolymer | 3.8 |
| Ethomeen C/15 | 1.7 |
| Polyethylene thickener | 2.5 |

The above composition sprayed acceptably from a rotary sprayer.

The above disclosure shows that the compositions of the present invention can be used to dispense centrifugally a mixture comprising a polar herbicide and a nonpolar herbicide.

The formulation of the present invention is stable chemically and physically. It may be sprayed directly onto plants without dilution or further mixing. The formulation has flowability for direct feed to a rotary spray device such that the flow is fast enough for a good spray pattern but slow enough to cover the target area with active herbicide. The droplet size of the spray is small enough to sufficiently cover the target area with a good spray swath.

It is to be understood that the detailed description of the present invention including the above example are given merely by way of illustration and that many modifications may be made therein without departing from the spirit or scope of the present invention.

**Claims**

1. A herbicidal emulsion composition comprising
   a) a herbicidally effective amount of an oxadiazolone herbicide;
   b) an aromatic solvent in an amount sufficient to dissolve the oxadiazolone herbicide;
   c) a herbicidally effective amount of N-phosphonomethylglycine;
   d) water in an amount sufficient to dissolve the N-phosphonomethylglycine;
   e) an emulsifying agent in an amount sufficient to render the emulsion stable; and, optionally,
   f) a polymeric thickening agent in an amount sufficient to thicken the composition such that at 25°C the time elapsed for 100 ml of the composition to pass through a measurement orifice of a Ford B2 Cup is in the range of about 20-125 seconds.
2. The composition of Claim 1 wherein the oxadiazolone herbicide is oxadiazon.
3. The composition of Claim 2 wherein the thickening agent is polyethylene homopolymer.
4. The composition of Claim 2 wherein the aromatic solvent is an alkylated aromatic petroleum derived solvent.
5. The composition of Claim 4 wherein a biocide is present to prevent bacterial growth therein.
6. The composition of Claim 4 wherein an antifoam agent is present to prevent foaming at high sheer rates.
7. The composition of Claim 4 wherein an antifreeze agent is present.
8. A herbicidal emulsion composition comprising:
   a) oxadiazon in the amount of about 5-25% by weight;
   b) an aromatic solvent for the oxadiazon in the amount of about 30-70% by weight;

c) N-phosphonomethylglycine or a soluble herbicidally acceptable salt thereof in the amount of about 1-16% by weight;

d) water in the amount of about 8-50% by weight;

e) polyethylene homopolymer thickening agent in the amount of about 0.01 to 2% by weight; and

f) an emulsifying agent in the amount of about 2-15% by weight.

9. The composition of Claim 8 wherein the aromatic solvent is an alkylated aromatic petroleum derived solvent.

10. The composition of Claim 8 wherein a biocide is present to prevent bacterial growth therein.

11. The composition of Claim 8 wherein an antifoam agent is present to prevent foaming at high sheer rates.

12. The composition of Claim 8 wherein an antifreeze agent is present to prevent freezing at cold temperatures.

European Patent Office

# EUROPEAN SEARCH REPORT

Application Number

EP 89 87 0214

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CENTRAL PATENTS INDEX, BASIC ABSTRACTS JOURNAL, week 84135, 24th October 1984, accession no. 84-217108135, Derwent Publications Ltd, London, GB; & JP-A-59 128 314 (SHOWA RHODIA KAGAKU) 24-07-1984 | 1,2,4 | A 01 N 57/20 // (A 01 N 57/20 A 01 N 43:82 A 01 N 25:04 ) |
| Y | IDEM | 3,5-12 | |
| Y | CH-A- 490 795 (SHELL INTERNATIONAL RESEARCH) * Column 1, line 1 - column 3, line 67; examples 1,2,5 * | 3,8,9 | |
| Y | EP-A-0 070 702 (MONSANTO CO.) * Page 3, line 15 - page 4, line 13; page 7, lines 23-31 * | 5-7,10-12 | |
| A | EP-A-0 244 754 (HOECHST AG) * Page 2, lines 11-35; page 3, lines 13-27 * | 1-12 | **TECHNICAL FIELDS SEARCHED (Int. Cl.5)** |
| A | EP-A-0 006 293 (IMPERIAL CHEMICAL INDUSTRIES LTD) * Page 2, lines 7-21; page 3, line 32 - page 5, line 19; example 2 * | 1-12 | A 01 N |
| A | US-A-3 413 109 (J.F. VARTIAK) * Column 2, line 61 - column 3, line 8; column 4, line 24 - column 5, line 7; column 5, lines 53-73; claims * --- -/- | 1-12 | |

The present search report has been drawn up for all claims

| Place of search | Date of completion of the search | Examiner |
|---|---|---|
| THE HAGUE | 04-05-1990 | MUELLNERS W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 89 87 0214

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,P | WO-A-8 810 069 (NOMIX MANUFACTURING CO., LTD) * Page 1, lines 15-27; page 2, lines 21-32; page 3, line 20 - page 4, line 8; page 4, line 26 - page 6, line 33; claims 1-7,29-31 * ----- | 1-12 | |

TECHNICAL FIELDS SEARCHED (Int. Cl.5)

The present search report has been drawn up for all claims

| Place of search | Date of completion of the search | Examiner |
|---|---|---|
| THE HAGUE | 04-05-1990 | MUELLNERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)